# EUROPEAN PATENT APPLICATION

(11) **EP 4 539 454 A1**
(43) Date of publication of application: **16.04.2025**
(21) Application number: 24200884.5
(22) Date of filing: 17.09.2024
(51) Int. Cl.: H04N 13/279, A63F 13/86, G02B 27/01, G06F 3/01, G06F 3/14, G06T 11/00, H04N 13/344, H04N 13/366

(54) **APPARATUS AND METHOD FOR HEAD MOUNTABLE DISPLAY WITH A SEPARATE SCREEN FOR SPECTATOR**

(30) Priority: 11.10.2023 GB 202315542
(71) Applicant: Sony Interactive Entertainment Inc., Tokyo 108-0075 (JP)
(72) Inventor: GREEN, Lawrence Martin, London, W1F 7LP (GB); LEUNG, Jun Yen, London, W1F 7LP (GB); CERRATO, Maurizio, London, W1F 7LP (GB)
(74) Representative: D Young & Co LLP

(57) **Abstract**

An apparatus comprises receiving circuitry to receive tracking information indicative of tracked poses of a head mountable display "HMD", rendering circuitry to render images for display having viewpoints corresponding to the tracked poses of the HMD, trajectory calculation circuitry to calculate a smoothed trajectory for position of the HMD in dependence on the tracking information, first image re-projection circuitry to re-project at least some of the rendered images according to a first re-projection operation to obtain first re-projected images for display by another display device, in which the first image re-projection circuitry is configured to re-project a given rendered image having a given viewpoint position for a different viewpoint position corresponding to the smoothed trajectory for the HMD, and output circuitry to output the first re-projected images for display by the another display device.

## Description

### Field of the Disclosure

The present disclosure relates to apparatus and methods for head mountable displays. In particular, the present disclosure relates to data processing apparatus and methods for display of images using head mountable displays.

### Background

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

A head-mountable display (HMD) is one example of a head-mountable apparatus for use in a virtual reality system in which an HMD wearer views a virtual environment. An HMD is an image or video display device which may be worn on the head or as part of a helmet. Either one eye or both eyes are provided with small electronic display devices.

Although the original development of HMDs and virtual reality was perhaps driven by the military and professional applications of these devices, HMDs are becoming more popular for use by casual users in, for example, computer game or domestic computing applications.

The techniques to be discussed are applicable to individual images (e.g. two-dimensional images or stereoscopic images) or to video signals comprising successive images. Therefore, references to "images" in the discussion below should be taken to encompass the use of the same techniques in respect of video signals.

The foregoing paragraphs have been provided by way of general introduction, and are not intended to limit the scope of the following claims. The described embodiments, together with further advantages, will be best understood by reference to the following detailed description taken in conjunction with the accompanying drawings.

### Summary

Various aspects and features of the present invention are defined in the appended claims and within the text of the accompanying description.

### Brief Description of the Drawings

The present technique will be described further, by way of example only, with reference to embodiments thereof as illustrated in the accompanying drawings, in which:
Figure 1 schematically illustrates an HMD worn by a user;
Figure 2 is a schematic plan view of an HMD;
Figure 3 schematically illustrates the formation of a virtual image by an HMD;
Figure 4 schematically illustrates another type of display for use in an HMD;
Figure 5 schematically illustrates a pair of stereoscopic images;
Figure 6 schematically illustrates a change of view of user of an HMD;
Figures 7A and 7B schematically illustrate example HMDs with motion sensing;
Figure 8 schematically illustrates a position sensor based on optical flow detection;
Figure 9 schematically illustrates an example of generation of images in response to HMD position or motion detection;
Figure 10 schematically illustrates data processing apparatus in accordance with embodiments of the disclosure;
Figure 11 schematically illustrates an example arrangement for displaying images;
Figures 12A and 12B schematically illustrate an example of tracked positions of an HMD and a corresponding smoothed trajectory calculated for the HMD;
Figure 13 schematically illustrates timing of rendering operations;
Figure 14 schematically illustrates an extrapolated trajectory calculated using a smoothed trajectory;
Figures 15 and 16 schematically illustrate data processing apparatus in accordance with embodiments of the disclosure; and
Figure 17 is a schematic flowchart illustrating a computer implemented method.

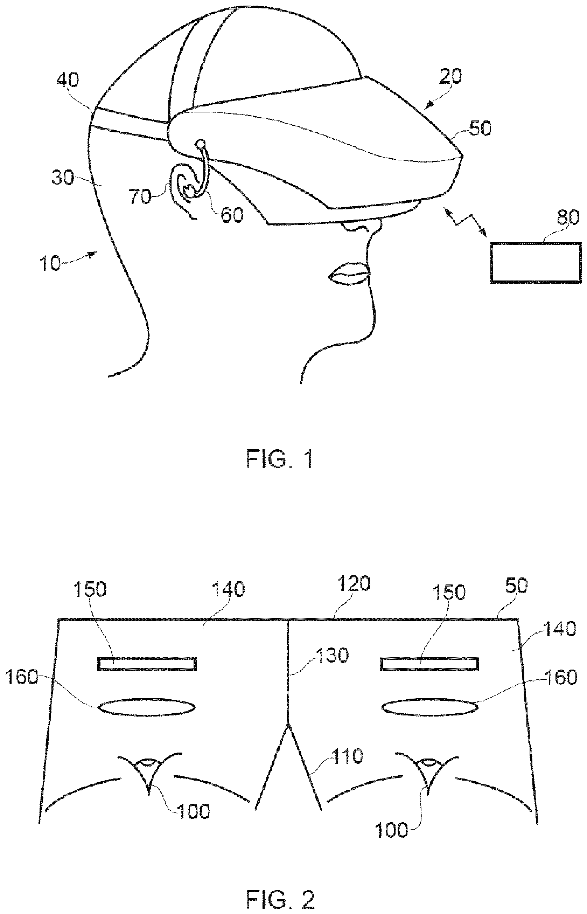

Referring now to Figure 1, a user 10 is wearing an HMD 20 on the user's head 30. The HMD comprises a frame 40, in this example formed of a rear strap and a top strap, and a display portion 50.

The example HMD of Figure 1 completely obscures the user's view of the surrounding environment. All that the user can see is the pair of images displayed within the HMD. In other examples, an HMD may partially obscure the use's view. For example, such an HMD may be used for presenting augmented reality content.

The example HMD has associated headphone earpieces 60 which fit into the user's left and right ears 70. The earpieces 60 replay an audio signal provided from an external source, which may be the same as the video signal source which provides the video signal for display to the user's eyes.

In operation, a video signal is provided for display by the HMD. This could be provided by an external video signal source 80 such as a video games machine or data processing apparatus (such as a personal computer), in which case the signals could be transmitted to the HMD by a wired and/or wireless connection. Examples of suitable wireless connections include Bluetooth^{®} connections. Audio signals for the earpieces 60 can be carried by the same connection. Similarly, any control signals passed from the HMD to the video (audio) signal source may be carried by the same connection.

Accordingly, the arrangement of Figure 1 provides an example of a head-mountable display system comprising a frame to be mounted onto an observer's head, the frame defining one or two eye display positions which, in use, are positioned in front of a respective eye of the observer and a display element mounted with respect to each of the eye display positions, the display element providing a virtual image of a video display of a video signal from a video signal source to that eye of the observer.

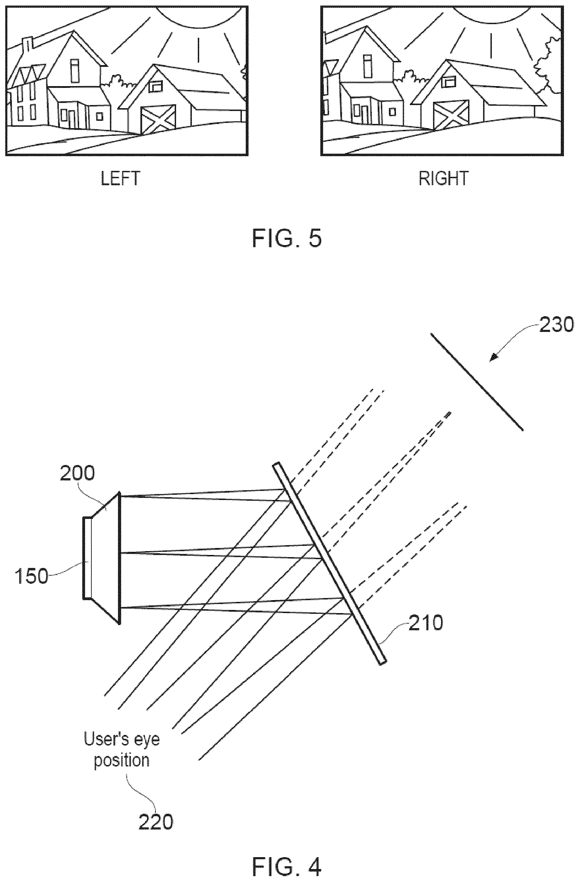

Figure 1 shows just one example of an HMD. Other formats are possible: for example an HMD could use a frame more similar to that associated with conventional eyeglasses, namely a substantially horizontal leg extending back from the display portion to the top rear of the user's ear, possibly curling down behind the ear. In other examples, the user's view of the external environment may not in fact be entirely obscured; the displayed images could be arranged so as to be superposed (from the user's point of view) over the external environment. An example of such an arrangement will be described below with reference to Figure 4.

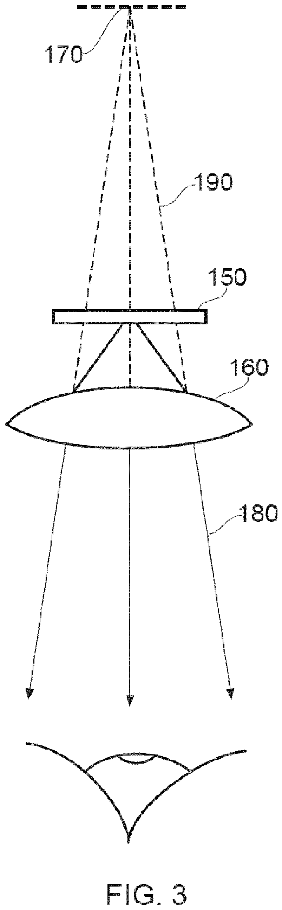

In the example of Figure 1, a separate respective display is provided for each of the user's eyes. A schematic plan view of how this is achieved is provided as Figure 2, which illustrates the positions 100 of the user's eyes and the relative position 110 of the user's nose. The display portion 50, in schematic form, comprises an exterior shield 120 to mask ambient light from the user's eyes and an internal shield 130 which prevents one eye from seeing the display intended for the other eye. The combination of the user's face, the exterior shield 120 and the interior shield 130 form two compartments 140, one for each eye. In each of the compartments there is provided a display element 150 and one or more optical elements 160. The way in which the display element and the optical element(s) cooperate to provide a display to the user will be described with reference to Figure 3.

Referring to Figure 3, the display element 150 generates a displayed image which is (in this example) refracted by the optical elements 160 (shown schematically as a convex lens but which could include compound lenses or other elements) so as to generate a virtual image 170 which appears to the user to be larger than and significantly further away than the real image generated by the display element 150. As an example, the virtual image may have an apparent image size (image diagonal) of more than 1 m and may be disposed at a distance of more than 1 m from the user's eye (or from the frame of the HMD). In general terms, depending on the purpose of the HMD, it is desirable to have the virtual image disposed a significant distance from the user. For example, if the HMD is for viewing movies or the like, it is desirable that the user's eyes are relaxed during such viewing, which requires a distance (to the virtual image) of at least several metres. In Figure 3, solid lines (such as the line 180) are used to denote real optical rays, whereas broken lines (such as the line 190) are used to denote virtual rays.

An alternative arrangement is shown in Figure 4. This arrangement may be used where it is desired that the user's view of the external environment is not entirely obscured. However, it is also applicable to HMDs in which the user's external view is wholly obscured. In the arrangement of Figure 4, the display element 150 and optical elements 200 cooperate to provide an image which is projected onto a mirror 210, which deflects the image towards the user's eye position 220. The user perceives a virtual image to be located at a position 230 which is in front of the user and at a suitable distance from the user.

In the case of an HMD in which the user's view of the external surroundings is entirely obscured, the mirror 210 can be a substantially 100% reflective mirror. The arrangement of Figure 4 then has the advantage that the display element and optical elements can be located closer to the centre of gravity of the user's head and to the side of the user's eyes, which can produce a less bulky HMD for the user to wear. Alternatively, if the HMD is designed not to completely obscure the user's view of the external environment, the mirror 210 can be made partially reflective so that the user sees the external environment, through the mirror 210, with the virtual image superposed over the real external environment.

In the case where separate respective displays are provided for each of the user's eyes, it is possible to display stereoscopic images. An example of a pair of stereoscopic images for display to the left and right eyes is shown in Figure 5. The images exhibit a lateral displacement relative to one another, with the displacement of image features depending upon the (real or simulated) lateral separation of the cameras by which the images were captured, the angular convergence of the cameras and the (real or simulated) distance of each image feature from the camera position.

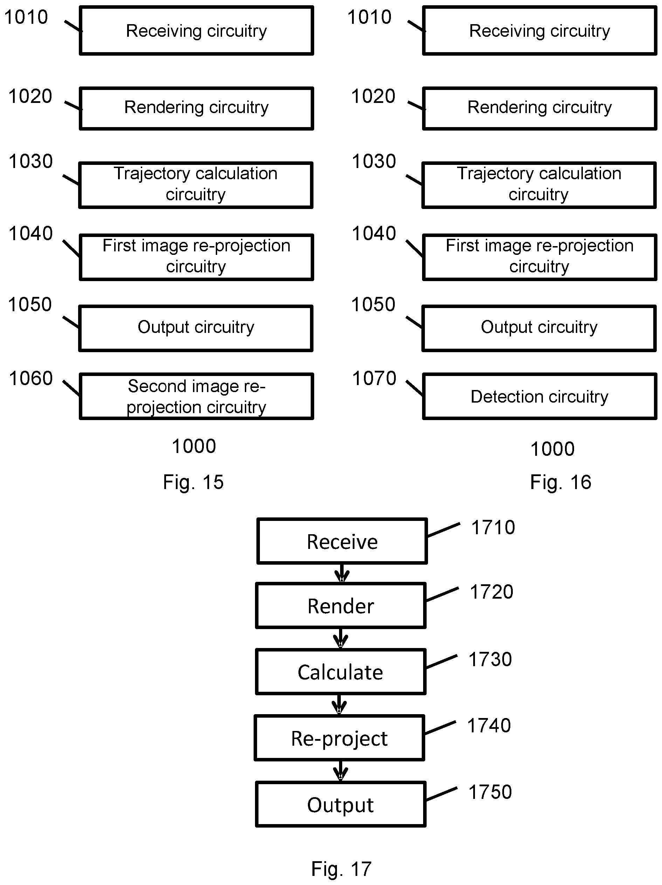

Note that the lateral displacements in Figure 5 (and those in Figure 15 to be described below) could in fact be the other way round, which is to say that the left eye image as drawn could in fact be the right eye image, and the right eye image as drawn could in fact be the left eye image. This is because some stereoscopic displays tend to shift objects to the right in the right eye image and to the left in the left eye image, so as to simulate the idea that the user is looking through a stereoscopic window onto the scene beyond. However, some HMDs use the arrangement shown in Figure 5 because this gives the impression to the user that the user is viewing the scene through a pair of binoculars. The choice between these two arrangements is at the discretion of the system designer,

In some situations, an HMD may be used simply to view movies and the like. In this case, there is no change required to the apparent viewpoint of the displayed images as the user turns the user's head, for example from side to side. In other uses, however, such as those associated with virtual reality (VR) or augmented reality (AR) systems, the user's viewpoint need to track movements with respect to a real or virtual space in which the user is located.

This tracking is carried out by detecting motion of the HMD and varying the apparent viewpoint of the displayed images so that the apparent viewpoint tracks the motion. This is discussed in more detail later.

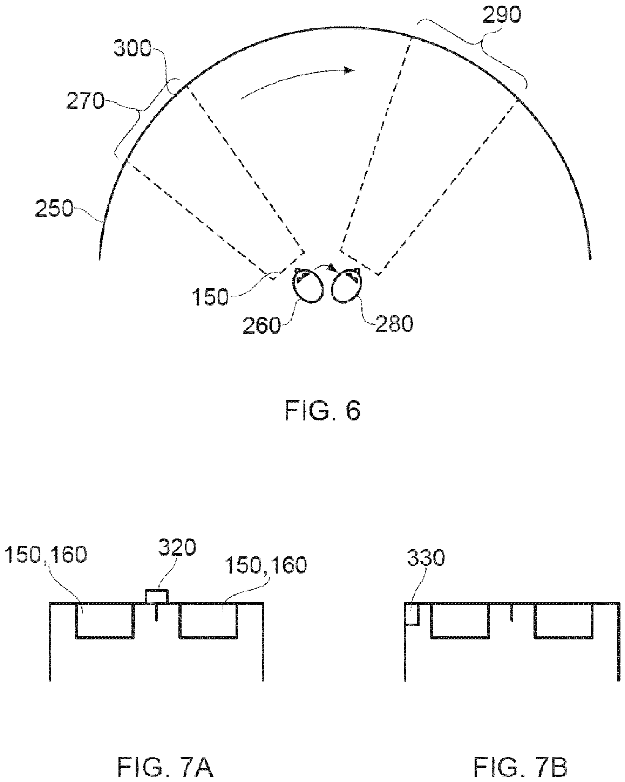

Figure 6 schematically illustrates the effect of a user head movement in a VR or AR system.

Referring to Figure 6, a virtual environment is represented by a (virtual) spherical shell 250 around a user. Because of the need to represent this arrangement on a two-dimensional paper drawing, the shell is represented by a part of a circle, at a distance from the user equivalent to the separation of the displayed virtual image from the user. A user is initially at a first position 260 and is directed towards a portion 270 of the virtual environment. It is this portion 270 which is represented in the images displayed on the display elements 150 of the user's HMD.

Consider the situation in which the user then moves his head to a new position and/or orientation 280. In order to maintain the correct sense of the virtual reality or augmented reality display, the displayed portion of the virtual environment also moves so that, at the end of the movement, a new portion 290 is displayed by the HMD.

So, in this arrangement, the apparent viewpoint within the virtual environment moves with the head movement. If the head rotates to the right side, for example, as shown in Figure 6, the apparent viewpoint also moves to the right from the user's point of view. If the situation is considered from the aspect of a displayed object, such as a displayed object 300, this will effectively move in the opposite direction to the head movement. So, if the head movement is to the right, the apparent viewpoint moves to the right but an object such as the displayed object 300 which is stationary in the virtual environment will move towards the left of the displayed image and eventually will disappear off the left-hand side of the displayed image, for the simple reason that the displayed portion of the virtual environment has moved to the right whereas the displayed object 300 has not moved in the virtual environment. Similar considerations apply to the up-down component of any motion.

Figures 7A and 7B schematically illustrate example HMDs with motion sensing. The two drawings are in a similar format to that shown in Figure 2. That is to say, the drawings are schematic plan views of an HMD, in which the display element 150 and optical elements 160 are represented by a simple box shape. Many features of Figure 2 are not shown, for clarity of the diagrams. Both drawings show examples of HMDs with a motion detector for detecting motion of the HMD and generating corresponding tracking data for the HMD.

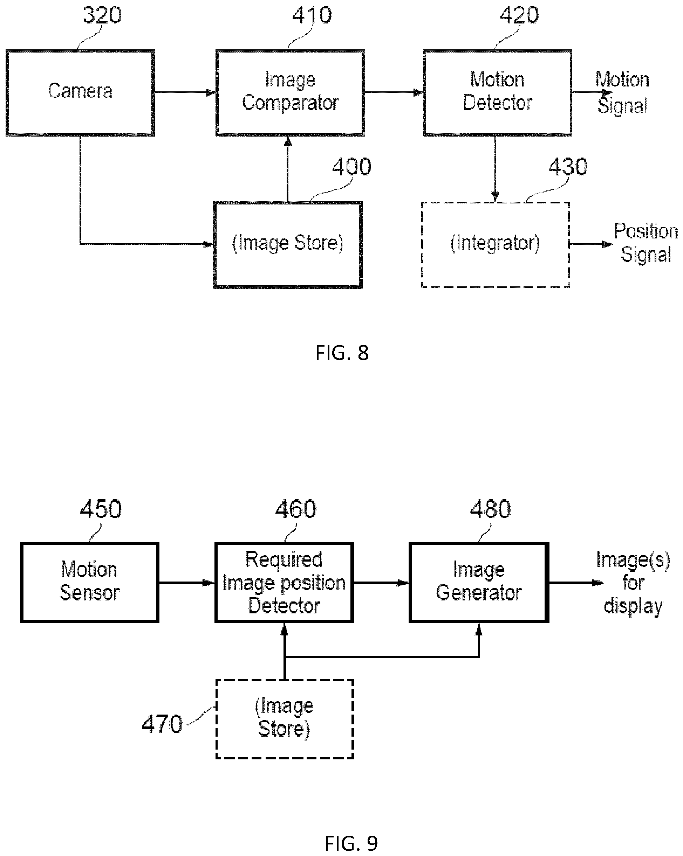

In Figure 7A, a forward-facing camera 320 is provided on the front of the HMD. This does not necessarily provide images for display to the user (although it could do so in an augmented reality arrangement). Instead, its primary purpose in the present embodiments is to allow motion sensing. A technique for using images captured by the camera 320 for motion sensing will be described below in connection with Figure 8. In these arrangements, the motion detector comprises a camera mounted so as to move with the frame; and an image comparator operable to compare successive images captured by the camera so as to detect inter-image motion.

Figure 7B makes use of a hardware motion detector 330 for generating tracking data. This can be mounted anywhere within or on the HMD. Examples of suitable hardware motion detectors are piezoelectric accelerometers or optical fibre gyroscopes. It will of course be appreciated that both hardware motion detection and camera-based motion detection can be used in the same device, in which case one sensing arrangement could be used as a backup when the other one is unavailable, or one sensing arrangement (such as the camera) could provide data for changing the apparent viewpoint of the displayed images, whereas the other (such as an accelerometer) could provide data for image stabilisation.

Figure 8 schematically illustrates one example of motion detection using the camera 320 of Figure 7A.

The camera 320 is a video camera, capturing images at an image capture rate of, for example, 25 images per second. As each image is captured, it is passed to an image store 400 for storage and is also compared, by an image comparator 410, with a preceding image retrieved from the image store. The comparison uses known block matching techniques (so-called "optical flow" detection) to establish whether substantially the whole image captured by the camera 320 has moved since the time at which the preceding image was captured. Localised motion might indicate moving objects within the field of view of the camera 320, but global motion of substantially the whole image would tend to indicate motion of the camera rather than of individual features in the captured scene, and in the present case because the camera is mounted on the HMD, motion of the camera corresponds to motion of the HMD and in turn to motion of the user's head.

The displacement between one image and the next, as detected by the image comparator 410, is converted to a signal indicative of motion by a motion detector 420. If required, the motion signal is converted by to a position signal by an integrator 430. In some examples, Simultaneous Localization and Mapping (SLAM) techniques may be used.

As mentioned above, as an alternative to, or in addition to, the detection of motion by detecting inter-image motion between images captured by a video camera associated with the HMD, the HMD can detect head motion using a mechanical or solid state detector 330 such as an accelerometer. This can in fact give a faster response in respect of the indication of motion, given that the response time of the video-based system is at best the reciprocal of the image capture rate. In some instances, therefore, the detector 330 can be better suited for use with higher frequency motion detection. However, in other instances, for example if a high image rate camera is used (such as a 200 Hz capture rate camera), a camera-based system may be more appropriate. In terms of Figure 8, the detector 330 could take the place of the camera 320, the image store 400 and the comparator 410, so as to provide an input directly to the motion detector 420. Or the detector 330 could take the place of the motion detector 420 as well, directly providing an output signal indicative of physical motion.

Other position or motion detecting techniques are of course possible. For example, a mechanical arrangement by which the HMD is linked by a moveable pantograph arm to a fixed point (for example, on a data processing device or on a piece of furniture) may be used, with position and orientation sensors detecting changes in the deflection of the pantograph arm. In other embodiments, a system of one or more transmitters and receivers, mounted on the HMD and on a fixed point, can be used to allow detection of the position and orientation of the HMD by triangulation techniques. For example, the HMD could carry one or more directional transmitters, and an array of receivers associated with known or fixed points could detect the relative signals from the one or more transmitters. Or the transmitters could be fixed and the receivers could be on the HMD. Examples of transmitters and receivers include infra-red transducers, ultrasonic transducers and radio frequency transducers. The radio frequency transducers could have a dual purpose, in that they could also form part of a radio frequency data link to and/or from the HMD, such as a Bluetooth^{®} link.

Figure 9 schematically illustrates an example of image processing carried out in response to a detected position or change in position of the HMD.

As mentioned above in connection with Figure 6, in some applications such as virtual reality and augmented reality arrangements, the apparent viewpoint of the video being displayed to the user of the HMD is changed in response to a change in actual position and/or orientation of the HMD and the user's head.

With reference to Figure 9, this may be achieved by a motion sensor 450 (such as the arrangement of Figure 8 and/or the motion detector 330 of Figure 7b) supplying data (tracking data) indicative of motion and/or current position to a required image position detector 460, which translates the actual position of the HMD into data defining the required image for display. An image generator 480 accesses image data stored in an image store 470 if required, and generates the required images from the appropriate viewpoint for display by the HMD. The external video signal source can provide the functionality of the image generator 480 and act as a controller to compensate for the lower frequency component of motion of the observer's head by changing the viewpoint of the displayed image so as to move the displayed image in the opposite direction to that of the detected motion so as to change the apparent viewpoint of the observer in the direction of the detected motion.

The techniques to be discussed below relate to image processing for allowing images rendered according to HMD tracking information for a respective HMD to be processed using image re-projection techniques. In particular, the techniques to be discussed below relate to re-projecting one or more images that have been rendered according to HMD tracking information so as to obtain one or more re-projected images for display by another display device for improving a viewing experience for a user viewing the another display device.

In the techniques to be discussed below, images are rendered for display in dependence on HMD tracking information such that the images have a viewpoint that corresponds to the HMD tracking. Image re-projection is used to re-project at least some of the rendered images to obtain one or more re-projected images having a different viewpoint. In other words, a rendered image is re-projected to change a viewpoint for the rendered image to a different viewpoint. In particular, at least some of the rendered images are re-projected to obtain one or more re-projected images that can improve a viewing experience for at least a user viewing another display device different from the HMD.

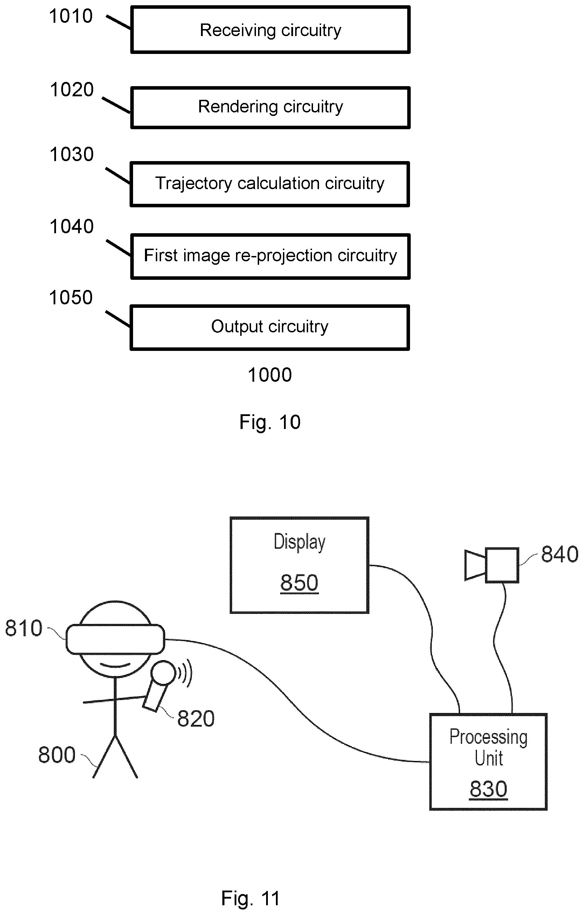

Referring now to Figure 10, in embodiments of the disclosure apparatus 1000 comprises receiving circuitry 1010, rendering circuitry 1020, trajectory calculation circuitry 1030, first image re-projection circuitry 1040 and output circuitry 1050.

The apparatus 1000 may be implemented in a distributed manner or may be implemented as a respective device, such as a personal computer, or and HMD, or a game console, or a combination thereof. For example, the apparatus 1000 may be implemented using a combination of a general purpose computing device and/or an HMD and/or an external display device (e.g. a monitor) which may communicate via a wired and/or wireless communication. Alternatively, the data processing apparatus 1000 may be a respective processing device for which the outputs, as discussed below, are communicated for use by other devices using a wired and/or wireless communication.

The receiving circuitry 1010 is operable to receive tracking information indicative of tracked positions and orientations (poses) of a head mountable display "HMD". The receiving circuitry 1010 can receive the tracking information according to a wired and/or wireless communication with an HMD and/or associated tracking device (such as a camera external to the HMD). In some cases, the apparatus 1000 may comprise one or more sensors for generating the tracking information such as one or more image sensors for image-based tracking and/or one or more inertial sensors.

For example, one or more sensors provided as part of an HMD (e.g. inertial sensors and/or image sensors) may be used to track movements of the HMD. Alternatively or in addition, one or more external cameras mounted so as to capture images including the HMD may be used to generate the tracking information for the HMD using so-called outside-in tracking. The tracking information may be received from an external tracker comprising one or more cameras for performing image-based HMD tracking.

More generally, the tracking information is indicative of tracked positions and orientations of the HMD with respect to the real-world environment and may be obtained using a combination of image sensors and/or hardware motion sensors (as discussed previously with respect to figures 8 and 9). The tracking information may for example be obtained via fusion of sensor data from one or more image sensors and one or more hardware motion sensors.

The tracking information may be indicative of tracked 2D positions or tracked 3D positions. The tracking information may also be indicative of tracked orientations with respect to a single axis of rotation, two axes of rotation or three axes of rotation. For example, the tracking information may be indicative of tracked 3D positions and a tracked orientation with respect to one or more of a horizontal axis of rotation and a vertical axis of rotation. Figure 6 provides an example of tracking HMD orientation with respect to a horizontal axis of rotation.

In some examples, the tracking information may be indicative of one or more of: a tracked orientation with respect to a yaw rotation axis; a tracked orientation with respect to a pitch axes; and a tracked orientation with respect to a roll axes. In some examples, the tracking information may comprise six degree of freedom (6DoF) information for pose tracking. Hence, the tracking information may comprise 3D position information as well as one or more of pitch, yaw and roll information.

The tracking information may also comprise timestamps associated with the tracked positions and/or orientations. Such data may be acquired periodically at a rate that is dependent on a sensor technology used for tracking. The pose for the HMD having a given timestamp may indicate a position and orientation for the HMD relative to a reference point within the real-world environment, or in some cases the pose for the HMD having a given timestamp may indicate a change in the position and/ or orientation for the HMD relative to a position and/or orientation for a previous timestamp.

Image processing operations are performed for rendering images for display with viewpoints corresponding to the tracking information for the HMD. Therefore, head movements by the user wearing the HMD can cause updates to the tracking information and thus updates to the viewpoints of the rendered images.

The rendering circuitry 1020 is operable to render images for display in dependence on the tracking information. The rendering circuitry 1020 comprises at least one of a CPU and a GPU operable to perform rendering operations for rendering images for display. Rendering operations typically comprise processing of model data or other predefined graphical data to obtain pixel values for the image pixels in an image frame. Unless otherwise specified, references herein to rendered images refer to either stereoscopic images comprising left and right images, or a single image that is to be viewed by both eyes of the user.

The rendering circuitry 1020 is operable to render images for display having viewpoint positions and orientations (viewpoint poses) corresponding to the tracked poses of the HMD. The rendering circuitry 1020 may render images at any suitable frequency/frame rate. Hence, the rendering circuitry 1020 is operable to render images for display having viewpoint positions and orientations corresponding to the tracked positions and orientations of the HMD. More generally, a sequence of images can be rendered by the rendering circuitry 1020 such that poses of the viewpoints for the rendered images correspond to the tracked poses of the HMD indicated by the tracking information.

The rendered images may visually represent a content such as a virtual environment (e.g. a virtual reality environment). In some examples, tracked poses of the HMD with respect to the real world environment may be mapped to virtual poses within a virtual environment. Any suitable technique for mapping between real world coordinates and virtual world coordinates may be used for this. In some examples, a 1:1 scaling may be used to map between the two coordinate systems. More generally, a M:N scaling may be used with M and N taking any suitable values, such as 1:2 for example such that one unit of distance (e.g. 1 metre) in one of the coordinate systems corresponds to two units of distance (e.g. 2 metres) in the other coordinate system.

Hence more generally, the rendering circuitry 1020 is operable to render images for display having viewpoint positions and orientations that correspond to the tracked positions and orientations of the HMD. For example, the tracking information may be indicative of a plurality of tracked positions corresponding a head movement from a first position X1 to a second position X2 over a period of time, and the rendering circuitry 1020 can render a plurality of images having viewpoint positions that move from the first position X1 to the second positon X2. In this way, for example, a head movement such as a lowering of the head (or raising the head, or moving forwards or backwards) can be represented in the change in the viewpoint of the rendered images.

The rendered images may visually represent any suitable content that may be viewed using an HMD. For example, the content may be a movie or video game for which a viewpoint position and orientation can be controlled by a user wearing an HMD. Hence, the user can move their head to thereby change the position and orientation of the HMD and images are rendered for display accordingly so that the viewpoint for the image frames moves in a corresponding fashion to the user's head movements. For example, head movements may be performed to view different parts of a virtual environment being displayed to the user by the HMD.

The inventors have appreciated that it can be desirable to allow observation of content being displayed to a user wearing an HMD by another user viewing another display device. For example, it may be desirable to allow another user to observe the content using another display device for purposes such as spectating and/or teaching purposes. In some examples, the content being displayed by the HMD may relate to an interactive content such as a video game, and it may be desirable to allow another user to spectate using another display device such as their own HMD and/or a display device such as a monitor or television.

However, for images having a viewpoint that corresponds to tracked poses of an HMD, display of such images to another user that is not the HMD wearer can result in an unsatisfactory and/or uncomfortable viewing experience. For example, sudden and/or small movements (of position and/or orientation) of the HMD and corresponding movements in the viewpoints of the rendered images can be disorienting for the other user and potentially capable of inducing motion sickness. In some cases, display of such images to a user other than the user wearing the HMD can potentially lead to nausea on the part of the other user and which can potentially limit use of such techniques.

Existing arrangements for allowing observation of content displayed by an HMD by another user have sought to provide rendering of additional images for display to the another user. For example, another image sequence may be rendered using a fixed viewpoint for display to the observer. Such arrangements therefore require rendering of images for display by the HMD and additional rendering of other images specifically intended for display to an observer. Hence, existing arrangements require further rendering operations for rendering other images for display to the observer. Rendering operations can be computationally intensive, and in particular rendering of high quality images for display to an observer may be particularly resource intensive.

Referring again to Figure 10, in embodiments of the disclosure the apparatus 1000 comprises the trajectory calculation circuitry 1030 and the first image re-projection circuitry 1040. The trajectory calculation circuitry 1030 is operable to calculate a smoothed trajectory for at least the position of the HMD (and optionally for the pose of the HMD) in dependence on the tracking information for the HMD received by the receiving circuitry 1010.

The first image re-projection circuitry 1040 is operable to re-project at least some of the rendered images (which have been rendered in accordance with the tracked poses of the HMD) according to a first re-projection operation to obtain first re-projected images for display by another display device. The first image re-projection circuitry 1040 is operable to re-project a given rendered image, having a given viewpoint position and a given viewpoint orientation, for at least a different viewpoint position that corresponds to the smoothed trajectory calculated for the HMD.

Therefore, the rendering circuitry 1020 is operable to render images for display having viewpoint poses corresponding to the tracked poses of the HMD. The viewpoint poses for the rendered images thus correspond to movements of the HMD. The rendered images may be output for display by the HMD. Optionally, re-projection techniques may be performed (e.g. locally at the HMD) to re-project at least some of the rendered images for current tracking information for the HMD at a time at which the images are to be displayed by the HMD to update the viewpoints for changes in the HMD pose between image rendering and image display (this is discussed in more detail).

The first image re-projection circuitry 1040 is operable to re-project at least some of the rendered images using a viewpoint position that corresponds to a point on the smoothed trajectory calculated for the HMD. Therefore, rather than outputting the rendered images for display to another display device associated with an observer user (which may be unsatisfactory for the reasons discussed previously, and which may potentially cause nausea), the apparatus 1000 performs image re-projection for the rendered images using the smoothed trajectory. In this way, the apparatus 1000 obtains re-projected images for which changes in the viewpoint position are smoothed over time thus providing a more satisfactory viewing experience for an observer and which may potentially reduce a likelihood of nausea for an observer.

Therefore, a sequence of rendered images may be generated with viewpoint positions and orientations that correspond to the tracked positions and orientations of the HMD, and re-projection can be performed with respect to the rendered images to change at least a viewpoint position to a different viewpoint position corresponding to the smoothed trajectory calculated for the HMD. A viewpoint orientation for a rendered image may remain unchanged by the first image re-projection operation or may optionally also be changed, as discussed later.

Hence more generally, a sequence of re-projected images having viewpoint positions corresponding to the smoothed trajectory calculated for the HMD can be obtained and output for display by another display device.

In some embodiments of the disclosure, the trajectory calculation circuitry 1030 is operable to calculate the smoothed trajectory for the pose of the HMD in dependence on the tracking information, the smoothed trajectory for the pose of the HMD comprising a plurality of calculated poses for the HMD for a period of time. The first image re-projection circuitry 1040 can thus be operable to re-project the given rendered image, having a given viewpoint pose, for a different viewpoint pose corresponding to the smoothed trajectory for the pose of the HMD. Hence, in some cases, in addition to re-projecting a given rendered image for a different viewpoint position, the first image re-projection operation may also re-project the given rendered image for a different viewpoint orientation using the calculated smoothed trajectory for the pose of the HMD. In this way, both changes in viewpoint position and orientation for the viewpoints of the rendered images can be smoothed in respect of the re-projected images that are output for display by the another display device. Performing the first image re-projection operation to re-project rendered images to different viewpoint poses corresponding to the smoothed trajectory for the pose of the HMD can thus allow smoothing of the viewpoint changes with respect to both position and orientation and may further reduce a likelihood of nausea for an observer. Moreover, performing the image re-projection using the smoothed trajectory for the pose of the HMD can potentially result in improved usability of the resulting content.

In the following discussion the references to tracked positions and tracked poses are used interchangeably. Techniques referring to positions can be performed using poses and vice versa techniques using poses can be performed using positions.

In the following discussion the references to a smoothed trajectory refer to any of a smoothed positional trajectory comprising calculated positions for an HMD and a smoothed pose trajectory comprising calculated poses for an HMD.

In the following discussion, the term "first image re-projection" is used to refer to a type of image re-projection that obtains re-projected images (also referred to below as first re-projected images) having viewpoints corresponding to a smoothed HMD trajectory (which may be a smoothed trajectory for HMD position or a smoothed trajectory for HMD pose). The terms "second image re-projection" and "second re-projected images" refer to another type of image re-projection that obtains re-projected images having viewpoints corresponding to a current tracked position of the HMD to potentially alleviate issues that may arise due to changes in HMD pose between a time when a rendering operation is started for an image frame and a time at which the rendered image frame is displayed by the HMD. The second type of image re-projection is optional and/or in some cases may be performed entirely under the control of a separate device, such as an HMD that receives the rendered images. Techniques using the second type of image re-projection will be discussed in detail later.

The first image re-projection circuitry 1040 may be operable to re-project each image rendered by the rendering circuitry 1020 according to the first re-projection operation. Therefore, for each rendered image, a corresponding first re-projected image having a viewpoint position corresponding to the smoothed trajectory may be obtained.

Alternatively or in addition, the first image re-projection circuitry 1040 may be operable to re-project a respective rendered image to obtain two or more re-projected images. For example, a given rendered image may be re-projected twice (or more generally more than once) to obtain two or more corresponding re-projected images. Such techniques can be beneficial for allowing rendering at a first rate (e.g. 30 Hz) and display of re-projected images at a frame rate greater than the image rendering rate.

In some examples, the first image re-projection circuitry 1040 may selectively re-project the rendered images. For example, the first image re-projection circuitry 1040 may selectively re-project the images rendered by the rendering circuitry 1020 in dependence upon whether a re-projection condition is satisfied.

An example of a re-projection condition may be whether a change in the tracked position during a predetermined period of time exceeds a predetermined threshold. For example, a predetermined velocity for the HMD may be used such that the first image re-projection circuitry 1040 is operable to perform the first image re-projection operation in response to the tracking information being indicative of a velocity that is greater than the predetermined velocity. Alternatively or in addition, another example of a re-projection condition may be whether a difference in the tracked position of the HMD and the calculated smoothed trajectory for the HMD is greater than a threshold distance. Any suitable value may be set for a positional deviation between the tracked position of the HMD and the calculated smoothed trajectory and used as threshold value for determining whether to perform the first image re-projection operation. Therefore the first image re-projection circuitry 1040 may be operable to perform the first image re-projection operation in response to the difference in the tracked position the calculated smoothed trajectory being greater than a threshold distance, and otherwise rendered images may be output without being subjected to the first re-projection operation.

More generally, in some embodiments of the disclosure the first image re-projection circuitry 1040 may be operable to selectively re-project images rendered by the rendering circuitry 1020 in dependence upon whether the tracking data satisfies one or more re-projection conditions. Generally, a re-projection condition associated with a jerky movement by the HMD can be specified so that in response to such a movement, the first image re-projection operation can be used for provide first re-projected images having a relatively smoother transition in viewpoint position compared to that of the viewpoint positions of the rendered images.

However, as mentioned above in some embodiments of the disclosure, the first image re-projection circuitry 1040 may be operable to project each image rendered by the rendering circuitry 1020 according to the first re-projection so as to re-project each rendered image for a different viewpoint associated with the smoothed trajectory. Hence, each rendered image may be processed by the first image re-projection circuitry 1040 for obtaining one or more corresponding re-projected images.

Referring again to Figure 10, the apparatus 1000 comprises the first image re-projection circuitry 1040 to re-project at least some of the rendered images to obtain re-projected images for display by another display device, and the output circuitry 1050 circuitry is operable to output the re-projected images for display by the another display device. The another display device is typically associated with an observer user and may for example be another HMD worn by the observer or a monitor or a tablet or smartphone or other similar display device.

Figure 11 schematically illustrates an example system in which a user wearing an HMD 810 views images displayed by the HMD. In some embodiments of the disclosure, the apparatus 1000 may be implemented as the processor 830. Alternatively, in some embodiments of the disclosure the apparatus 1000 may implemented in a distributed fashion.

In the example of Figure 11, the processing unit 830 is operable to render images for display by the HMD with viewpoint poses for the rendered images corresponding to tracked poses of the HMD 810 indicated by tracking information generated by the camera 840 (whilst a camera is shown in this example, inertial sensor data from one or more sensors of the HMD may be used instead or in addition).

The processing unit 830 may be operable to output the rendered images for display by the HMD 810 using a wired and/or wireless communication (e.g. Bluetooth^{®}). In some examples, the processing unit 830 may perform a second type of image re-projection operation (different to that discussed above with respect to the first image re-projection circuitry 1030) to obtain and output re-projected images for display by the HMD. In some examples, the second type of image re-projection operation may in fact be performed at the HMD 810. For example, for cases in which the HMD 810 comprises one or more sensors (e.g. image sensors and/or inertial sensors for motion tracking) for tracking motion of the HMD, the second type of re-projection may be performed locally at the HMD 810 to re-project a rendered image using a current tracked pose (and optionally orientation) of the HMD just before or at a display time for the rendered image so that the re-projection can substantially align the viewpoint of the display image with the HMD. In the example of Figure 11, the line connecting the processing unit 830 and the HMD 810 may represent a wired and/or wireless communication.

Furthermore, the processing unit 830 is operable to re-project at least some of the rendered images according to the above mentioned first re-projection operation (discussed above with respect to the first image re-projection circuitry 1040) to obtain first re-projected images for display by the display device 850 (which in this example is a monitor device). The processing unit 830 can thus output first re-projected images for display by the display device 850 using a wired and/or wireless communication (e.g. Bluetooth^{®}). In the example of Figure 11, the line connecting the processing unit 830 and the HMD 810 may represent a wired and/or wireless communication.

Hence in the example of Figure 11, the processing unit 830 is operable to render images in dependence upon tracking information for the HMD 810, output the rendered images for display by the HMD 810 (and/or re-projected images that have been re-projected according to the second type of re-projection), and output first re-projected images for display by the display device 850. The images output for display by the HMD 810 thus have viewpoints which correspond with the tracked positions of the HMD. The images output for display by the display device 850 have viewpoints which correspond with the calculated smoothed trajectory for the HMD.

In this way, the viewing experience for a user viewing the display device 850 can be improved. In particular, sharp and/or sudden head movements by the user wearing the HMD can be represented for the images displayed by the HMD, whereas such movements may be reduced or even removed (e.g. in the case of small head jitter movements and/or micro head movements) in relation to the images displayed by the display device 850.

More generally, the processing unit 830 may output an HMD image feed for display by the HMD 810 and output an observer image feed for display by the display device 850, in which the HMD image feed corresponds to the tracked poses of the HMD, and the observer image feed instead corresponds to the calculated positions (or poses) associated with the calculated smoothed trajectory.

Furthermore, the techniques of the present disclosure provide improvements in processing efficiency relative to other arrangements which require additional rendering operations to obtain images for output to an observer. This is achieved by re-projecting at least some of the images that have been rendered for display by the HMD for different viewpoints corresponding to the calculated smoothed trajectory. Whereas rendering operations have a given render latency requiring a given period of time from when rendering is started to when an image is completely rendered, image re-projection has an associated latency (referred to as re-projection latency) that is much shorter in duration and can be used to re-project a rendered image for a different viewpoint at low computational cost and with minimal delay.

Translation of the viewpoint for a rendered image to a different viewpoint associated with the smoothed trajectory can potentially result in the re-projected image comprising one or more portions outside the rendered image thus presenting a problem in that image material may be missing for one or more such portions. For cases, in which deviation between the tracked position and the smoothed trajectory is minimal, such problems may be overcome by interpolating of pixel values in the re-projected image to fill in one or more such portions and/or adjusting a positon of a border for a re-projected image.

In some embodiments of the disclosure, the rendering circuitry 1020 is operable to render at least some of the images for display having a field of view greater than a display field of view associated with the HMD. In this way, one or more images may be rendered to comprise image material outside a display field of view for the HMD and thus reducing a likelihood that a re-projected image comprises a portion for which image material is missing.

In some embodiments of the disclosure, in response to a first re-projected image comprising at least one portion for which image material is not included in the rendered image, the first image re-projection circuitry 1040 may be operable to mask or fill in the at least one portion using image data from one or more of: a previously rendered image comprising image data for a portion of a scene corresponding to the at least one portion; and a predefined reference image associated with a content for which the images are being rendered.

The first image re-projection circuitry 1040 is operable to re-project at least some of the rendered images according to a first re-projection operation so as to change a viewpoint position (or viewpoint pose) for a given rendered image to a different viewpoint position (or different viewpoint pose) corresponding to the smoothed trajectory. Such a geometric re-projection may be implemented in a number of ways, for example using a warping process, pixel shifting process and/or scaling process of a rendered image to compensate for a different viewpoint. Hence, in some examples the first re-projection may perform an image warping processing using a difference between the given viewpoint for the rendered image and the new viewpoint corresponding to the smoothed trajectory.

As explained above, the trajectory calculation circuitry 1030 is operable to calculate a smoothed trajectory for the HMD in dependence on the tracking information received by the receiving circuitry 1010. Using a plurality of tracked positions of the HMD over a period of time, the trajectory calculation circuitry calculates a smoothed trajectory for the position of the HMD. The trajectory calculation circuitry 1030 may use any suitable smoothing calculation for calculating a sequence of positions defining a smoothed trajectory in response to tracking information indicative of a plurality of tracked positions.

An example smoothing calculation may comprise one or more curve fitting functions. Given a set of tracked positions, one or more known curve fitting functions may be used for constructing a smoothed function that approximately fits the set of tracked positions. Alternatively or in addition, a smoothing calculation may use a moving average calculation using a history of the tracking information. Alternatively or in addition, a smoothing calculation may use a most recently calculated position of the smoothed trajectory and a next tracked position of the HMD to calculate a next position for the smoothed trajectory. For example, such a smoothing calculation may average the most recently calculated position of the smoothed trajectory with a next received tracked position of the HMD to thereby calculate a next position of the smoothed trajectory, in which a greater weighting is given to the most recently calculated position of the smoothed trajectory.

More generally, in response to receiving tracking information indicative of a sequence of tracked positions for the HMD, a corresponding smoothed trajectory can be calculated and the first image re-projection techniques can be performed to re-project one or more rendered images using calculated positions corresponding to the smoothed trajectory. Similarly, in response to receiving tracking information indicative of a sequence of tracked poses for the HMD (e.g. 3D positions and one or more of yaw, pitch and roll information), a corresponding smoothed trajectory can be calculated for the pose of the HMD, and the first image re-projection techniques can be performed to re-project one or more rendered images using calculated poses corresponding to the smoothed trajectory.

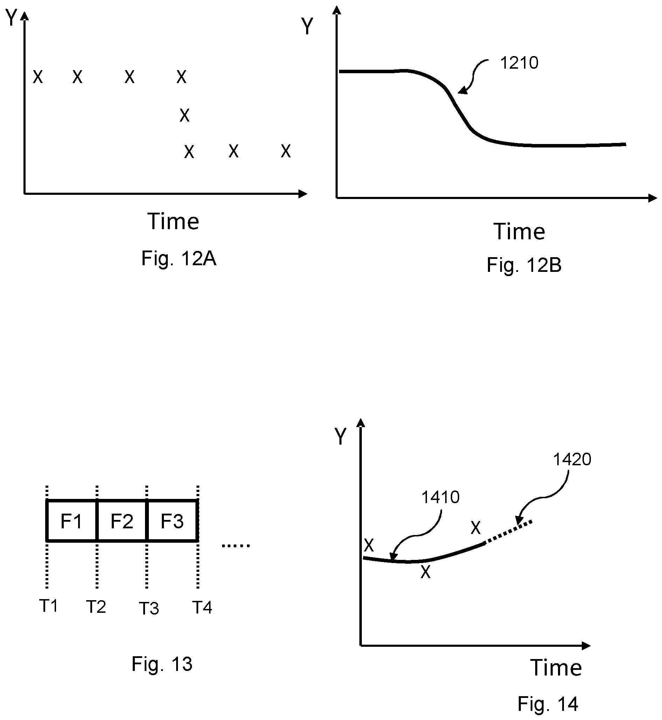

Figures 12A and 12B schematically illustrate an example of calculating a smoothed trajectory. The example of Figures 12A and 12B is discussed with respect to a single axis in a three dimensional space for clarity of explanation and the techniques can be similarly applied for two and three dimensional examples and/or one or more rotation axes. Figure 12A schematically shows tracked positions (represented by the crosses) of an HMD with respect to a Y axis over a period of time.

In the example of Figure 12A, the Y axis may for example be a vertical axis with respect to the three dimensional real-world space such that Figure 12A represents an example in which a height of the HMD changes from a first height to a second height lower than the first height. For example, when wearing an HMD, a user's head position may drop. This may be due to a head movement and/or a body movement by the user. In the case of a jitter type of movement, the user's head position may sharply drop and in some cases this may be followed by a sharp movement to substantially restore the head to the previous position. Figure 12A represents a simplified example and the tracking information may in fact comprise a greater number of respective tracked positions than what is illustrated in the figure.

Figure 12B schematically illustrates an example of a smoothed trajectory 1210 for the HMD that is calculated in dependence on the tracked positions shown in Figure 12A. The smoothed trajectory 1210 may be calculated using any suitable smoothing calculation using at least some previous tracked positions for the HMD. For example, a curve fitting function that approximates time series tracked positions may be used. Alternatively or in addition, a moving average calculation may be used. For example, a point on the smoothed trajectory 1210 at a respective time may be calculated by averaging a plurality of tracked positions preceding the respective time. Moreover, a first point on the smoothed trajectory 1210 at a given first time may be calculated by averaging a plurality of previous tracked positions within a first time window preceding that given time, and a second point on the smoothed trajectory 1210 at another given time subsequent to the first time may be calculated by averaging a plurality of previous positions within a second time window preceding another given time. A sliding window technique may be used, also known as a moving average or a rolling average calculation.

Alternatively or in addition, a most recent position calculated for the smoothed trajectory may be averaged with a next tracked position for the HMD to calculate a next position for the smoothed trajectory, and a weighting factor associated with the most recent position on the smoothed trajectory may correspond to a greater weighting than a weighting factor associated with the next tracked position. In this case, an initial start-up process may include setting an initial tracked position for the HMD as a first position for the smoothed trajectory, and then a next tracked position for the HMD is averaged with the first position for the smoothed trajectory (using a preferential weighting for the first position) to calculate a next position for the smoothed trajectory. This processing can be repeated for each received tracked position (or potentially every other or on in N, where N may be an integer in the range 2 to 10, for example) to progressively advance the smoothed trajectory in response to newly received tracking information.

More generally, the trajectory calculation circuitry is operable to calculate a smoothed trajectory for the HMD in dependence on the tracking information and to calculate a next portion of the smoothed trajectory for the HMD in response to receiving new tracking information.

Using the tracked positions for the period of time shown in Figure 12A, respective images can be rendered for each or some of the respective tracked positions. The calculated smoothed trajectory 1210 shown in Figure 12B comprises calculated positions for the HMD over the same period of time. Hence, an image rendered using tracking information at a respective time can be re-projected using a calculated position corresponding to a point on the calculated smoothed trajectory 1210.

A rendering operation for rendering a given image has an associated render latency requiring a given period of time from when rendering is started to when the image is completely rendered. Figure 13 schematically illustrates successive rendering operations F1, F2 and F3 for rendering three successive image frames. In Figure 13, a horizontal width of each of the blocks represents a render latency (or put differently a latency associated with a rendering processing operation) and time flows from left to right. In this example, the rendering operations are each shown as being of a same duration however in other examples at least some of the periods may be different.

The rendering operation F1 starts at a first time T1 using a tracked position for the HMD and is completed at a second time T2. The time interval T1 to T2 thus represents a render latency (or render period) for a respective image. The rendering operation F2 starts at the second time T2 using another tracked position for the HMD and is subsequently completed at a third time T3 and so on. Of course, there may be an interval between the ending of one rendering operation and a starting of a next rendering operation. In some examples, rendering operations may be performed in parallel such that at least a portion of one rendering operation may overlap in time with a portion of another rendering operation for another image frame.

The above mentioned first image re-projection operation may be performed with respect to each of the three rendered images so as to re-project these images for different viewpoint positions corresponding to the smoothed trajectory 1210. The three rendered images may each be re-projected to obtain three corresponding re-projected images (or potentially some of the rendered images may be subjected to two or more re-projections to obtain two or more corresponding re-projected images) for which a viewpoint position for the three corresponding re-projected images smoothly transitions along the smoothed trajectory 1210. Hence, in some cases a stream of first re-projected image may be obtained with a viewpoint position that tracks along the smoothed trajectory 1210.

With respect to the first image frame (resulting from the rendering operation F1), the first image re-projection operation may use a calculated position on the smoothed trajectory 1210 at a time corresponding to one of the start time T1 of the rendering operation F1, the end time T2 of the rendering operation F1, and a time between the start time T1 and the end time T2 of the rendering operation. In some cases, given that the first image re-projection operation is performed after the image has been rendered, this can potentially allow use of a calculated position corresponding to the smoothed trajectory 1210 for a time later than the times T1 and T2. In some examples, re-projection for the first image frame (resulting from the rendering operation F1) may use a most recently calculated position on the smoothed trajectory 1210, which may have been calculated in dependence on one or more tracked positions received after the start time T1, and potentially after the end time T2.

Hence, in some embodiments of the disclosure, the first image re-projection circuitry 1030 is operable to re-project a given rendered image having a given viewpoint position for a different viewpoint position corresponding to a calculated position on the smoothed trajectory for a respective time that is later than a start time (e.g. T1 for the rendering operation F1) of a rendering operation for rendering the given rendered image. In some embodiments of the disclosure, the first image re-projection circuitry 1030 is operable to re-project a given rendered image having a given viewpoint position for a different viewpoint position corresponding to a calculated position on the smoothed trajectory for a respective time that is between a start time of a rendering operation for rendering the given rendered image and a time at which the first image re-projection operation is to be performed for the given rendered image.

More generally, the first image re-projection circuitry 1040 allows quick and efficient provision of the first re-projected images using images rendered by the rendering circuitry 1020. Therefore, rendered images can be output for display by the HMD, and the first re-projected images can be output for display by the another display device, and the minimal delay associated with the first image re-projection can potentially allow provision of an observer feed with little or no lag with respect to a feed observed by the HMD wearer.

In some examples, the apparatus 1000 may comprise storage circuitry to temporarily store first re-projected images so that a delay (potentially of the order of a few seconds) can be introduced between an HMD feed and an observer feed. This may be beneficial for various purposes. For example, it may be desirable to deliberately delay the observer feed to reduce interference by a spectator with gameplay by a user wearing the HMD.

Depending on a rate at which tracking information is obtained and/or a rate at which image frames are rendered, it may be that image rendering is performed at a rate different to that associated with the tracking information. For example, hardware position and/or orientation tracking using sensors such as accelerometers and/or gyroscopes are typically capable of achieving sampling rates in excess of image rendering rates. Some HMD arrangements may use inertial sensors with data rates in the range of 50 Hz to 1 KHz, for example. Hence, the apparatus 1000 is operable to receive tracking information and a most recent tracked position of the HMD available at a start time for a rendering operation can be used for that rendering operation.

In some embodiments of the disclosure, the trajectory calculation circuitry is configured to calculate the smoothed trajectory in dependence on a moving average calculation (e.g. mean or weighted mean) using the received tracking information. The moving average calculation uses an average of a plurality of previous tracked positions for the HMD to calculate an average position for the HMD at a respective time.

For example, in response to receiving a next tracked position for the HMD at a respective time (e.g. an X, Y, coordinate and an associated timestamp), an average of the next tracked position with a predetermined number of preceding tracked positions may be calculated and the resulting average used as the calculated position for the smoothed trajectory for that respective time. Subsequently, when another tracked position for the HMD at a subsequent respective time is received, the process described above can be repeated to average the another tracked position with a predetermined number of tracked positions preceding the another tracked position. In this way, a sliding window averaging technique can be achieved for calculating positions for the smoothed trajectory.

More generally, an average of a first plurality of tracked positions for the HMD during a first time window (time period) may be used to calculate a respective average position, and an average of a second plurality of tracked positions for the HMD during a next time window (time period) may be used to calculate another average position and so on.

In some examples, tracked positions within a given time window may be averaged using equal weightings for each of the tracked positions. In other examples, tracked positions within a given time window may be averaged using two or more different weights. For example, N previous tracked positions (e.g. N = 20 tracked positions which may correspond to a window duration of 0.4 seconds in the case of a 50 Hz tracking arrangement) may be averaged for calculating an average position, and a first half of the tracked positions may have a first weighting whereas the second half of the tracked positions may have a second weighting different from the first weighting. In some examples, the respective tracked positions within a given time window may be each weighted differently with weights progressively decreasing from a start time of the given time window to an end time of the given time window. In this way, more recent tracked positions can be given a lower weighting.

The above mentioned first time window and the next time window may be partially overlapping in time. The next time window may start at a start time later than a start time of the first window and may end at an end time later than an end time of the first window. In some examples, the time window may be set to have a duration corresponding to a time interval during which at least two (or more generally M, where M may be any suitable value that may be varied by a user depending on an amount of smoothing) tracked positions are included. The time windows may each have a same duration. In some examples, a time duration for each window may be in the range 0.1 to 5 seconds. Other suitable time durations are also considered. It will be appreciated that a longer time window can be beneficial for providing a smoother trajectory and that time window duration can be freely set by a developer.

As mentioned previously, in some embodiments of the disclosure the smoothed trajectory comprises a plurality of calculated positions for the HMD for a period of time and the trajectory calculation circuitry is configured to calculate a next position for the smoothed trajectory in dependence on a weighted average of a most recent calculated position for the smoothed trajectory and a current tracked position of the HMD with a greater weighting for the most recent calculated position. A greater weighting can be used for the most recent calculated position and this may be freely set by a developer according to an amount of smoothing that is desired. For example, a weighting factor having a value of one may be used for the current tracked position of the HMD and a weighting factor for the most recent calculated position may have a value in the range 1.5 to 50. Other suitable values are also considered.

In some embodiments of the disclosure, the trajectory calculation circuitry 1030 is operable to calculate an extrapolated trajectory for the HMD in dependence on at least a portion of the smoothed trajectory for the HMD, the extrapolated trajectory comprising one or more predicted positions / predicted poses for the HMD. Figure 14 schematically illustrates an example of a portion of a smoothed trajectory 1410 (shown as a solid line) for the HMD that is calculated according to any of the techniques discussed previously. Only a most recent portion of the smoothed trajectory 1410 is shown. Whilst three tracked positions are plotted (indicated by the crosses), there may be any number of previous tracked positions not shown in Figure 14.

The trajectory calculation circuitry 1030 can be operable to calculate an extrapolated trajectory 1420 (shown as a dashed line) corresponding to one or more predicted positions for the HMD. Hence, using the smoothed trajectory 1410, one or more future positions for the smoothed trajectory of the HMD may be predicted.

In some embodiments of the disclosure, the first image re-projection circuitry 1040 is operable to re-project a given rendered image having a given viewpoint position for a different viewpoint position, in which the different viewpoint position corresponds to one of: a calculated position associated with the smoothed trajectory for the HMD; and a predicted position for the HMD (e.g. corresponding to an extrapolated trajectory for the HMD calculated in dependence on at least a portion of the smoothed trajectory for the HMD).

In some embodiments of the disclosure, the first image re-projection circuitry 1330 is configured to re-project a given rendered image having a given viewpoint position for a different viewpoint position corresponding to a calculated position on the smoothed trajectory, the calculated position on the smoothed trajectory corresponding to a respective time that is later than a start time of a rendering operation for rendering the given rendered image

As discussed previously, in some embodiments of the disclosure, the output circuitry 1050 may be operable to output rendered images for display by the HMD, or the apparatus 1000 may be operable to perform a second type of image re-projection operation to obtain second re-projected images for display by the HMD.

Referring now to Figure 15, in some embodiments of the disclosure the apparatus 1000 further comprises second image re-projection circuitry 1060. The second image re-projection circuitry 1060 is configured to re-project at least some of the rendered images according to a second re-projection operation to obtain second re-projected images for display by the HMD, wherein the output circuitry 1050 is configured to output the second re-projected images for display by the HMD (e.g. HMD 810 in Figure 11).

The second image re-projection circuitry 1060 is operable to perform a second re-projection operation with respect to one or more rendered images to obtain one or more second re-projected images that can be beneficial for enhancing a viewing experience for the user wearing the HMD. Head movements by the user may cause a discrepancy between a viewpoint of a rendered image and a viewpoint of the HMD at a display time for the rendered image. Moreover, time (or more specifically render latency) associated with rendering an image for display can potentially result in a situation in which the tracking information used for rendering the image frame is different from a viewpoint of the user wearing the HMD at a display time at which the image is displayed to the user. Hence, the second re-projection circuitry is operable to perform the second re-projection operation for enhancing a viewing experience of the user wearing the HMD.

Moreover, in some embodiments of the disclosure, a same rendered image that is rendered having a viewpoint corresponding to the tracking information for the HMD can be processed both by the first image re-projection circuitry 1040 and the second image re-projection circuitry 1060 to obtain a corresponding first re-projected image and also a corresponding second re-projected image. Hence, a single rendered image may be used to obtain two different re-projected images with one having a viewpoint that is suited for display to an observer not wearing the HMD that is being tracked and the other being suited for display to the HMD wearers. Moreover, in some embodiments of the disclosure, an HMD feed can be output comprising the second re-projected images and an observer feed can also be output comprising the first re-projected images.

In some embodiments of the disclosure, the second image re-projection circuitry 1060 is configured to re-project a given rendered image according to the second re-projection operation to re-project the given rendered image for a current viewpoint corresponding to a current tracked pose of the HMD. The second re-projection operation can be performed to re-project the given rendered image for a current viewpoint that is identified in dependence on subsequent tracking information (i.e. generated later than the tracking information used to render the given rendered image), also referred to as updated tracking information, indicative of a position and/or orientation of the HMD at a time subsequent to the initiating of the rendering operation for rendering the given rendered image and thus providing a more up-to date indication. Moreover, the updated tracking information may be indicative of HMD position and/or orientation at a display time at which the rendered image is to be displayed by the HMD so that re-projection to a viewpoint matching the current HMD position and/or orientation can be performed.

Hence, the second image re-projection circuitry 1060 can re-project a given rendered image in dependence on a difference between the tracking information used to render the image and current tracking information (indicative of a current tracked position and/or tracked orientation of the HMD) so as to re-project the given rendered image to a current viewpoint that corresponds to the current status of the HMD. In this way, the second re-projection operation can be considered as a late update to the viewpoint for improving an experience for an HMD user.

In some embodiments of the disclosure, the rendered images correspond to a video game, and the output circuitry 1050 is operable to output a player video image sequence for display by the HMD and output a spectator video image sequence for display by the another device, in which the player video image sequence comprises a sequence of images at least some of which have been re-projected according to the techniques discussed above using the second re-projection operation, and the spectator video image sequence comprises a sequence of images at least some of which have been re-projected according to the techniques discussed above using the first re-projection operation.

As explained above, the data processing apparatus 1000 may in some cases be implemented in a distributed manner or may be implemented as a respective device (e.g. a game console). In some embodiments of the disclosure, the receiving circuitry 1010, the rendering circuitry 1020, the trajectory calculation circuitry 1030 and the first image re-projection circuitry 1040 may be provided as part of a respective processing device (such as a general purpose computing device or an entertainment device, such as a game console) and the second image re-projection circuitry 1060 may be provided as part of the HMD.

In some examples, the apparatus 1000 may output rendered images to the HMD. Each rendered image may be associated with metadata identifying the tracking information used for rendering the image. Hence, the second image re-projection operation may be performed at the HMD using the metadata and current tracking information.

Referring now to Figure 16, in some embodiments of the disclosure the apparatus 1000 comprises detection circuitry 1070 to detect image-based motion vector information for at least some of the rendered images, and wherein the first image re-projection circuitry 1040 is operable to re-project a given rendered image for a different viewpoint corresponding to the smoothed trajectory in dependence on the image-based motion vector information. Known video compression techniques typically use motion vectors computed for macroblocks (e.g. 16x16 pixel blocks in an image frame) for indicating a change in position of a macroblock between frames in a sequence of image frames. An image frame is segmented into macroblocks and the macroblocks in one image frame can be matched with macroblocks in another image frame and a motion vector pointing from the centre of a macroblock in one image frame to the centre of a matching macroblock in another image frame is computed. As such, motion vector information for providing an indication of a degree of motion for one or more graphical features in the rendered images can be detected for use by the first image re-projection circuitry 1040. For example, motion vector information can be extracted from an MPEG stream using techniques such as those disclosed in "Extraction of Motion vectors from an MPEG Stream, J. Gilvarry, Technical Report 1999, Dublin City University", the contents of which are incorporated herein by reference. The detection circuitry 1070 can thus detect motion vector information for at least some of the rendered images. The first image re-projection circuitry 1040 can be operable to perform the first image re-projection operation for a given rendered image in dependence on the image-based motion vector information so as to account for motion of graphical features within the sequence of rendered images. For example, re-projection can be performed to account for motion(s) of one or more objects within the rendered images.

The components shown in Figures 15 and 16 may be combined. Hence, in some examples, apparatus 1000 may comprise both the second image re-projection circuitry 1060 and the detection circuitry 1070.

Referring now to Figure 17, in embodiments of the disclosure a data processing method comprises:
receiving (at a step 1710) tracking information indicative of tracked poses of a head mountable display "HMD";
rendering (at a step 1720) images for display having viewpoints corresponding to the tracked poses of the HMD;
calculating (at a step 1730) a smoothed trajectory for position of the HMD in dependence on the tracking information;
re-projecting (at a step 1740) at least some of the rendered images according to a first re-projection operation to obtain first re-projected images for display by another display device;
in which re-projecting a given rendered image having a given viewpoint position according to the first re-projection operation comprises re-projecting the given rendered for a different viewpoint position corresponding to the smoothed trajectory for the position of the HMD; and
outputting (at a step 1750) the first re-projected images for display by the another display device.

It will be appreciated that example embodiments can be implemented by computer software operating on a general purpose computing system such as a games machine. In these examples, computer software, which when executed by a computer, causes the computer to carry out any of the methods discussed above is considered as an embodiment of the present disclosure. Similarly, embodiments of the disclosure are provided by a non-transitory, machine-readable storage medium which stores such computer software.

It will also be apparent that numerous modifications and variations of the present disclosure are possible in light of the above teachings. It is therefore to be understood that within the scope of the appended claims, the disclosure may be practised otherwise than as specifically described herein.

Example(s) of the present technology are defined by the following numbered clauses:
1. Apparatus comprising:
   receiving circuitry to receive tracking information indicative of tracked poses of a head mountable display "HMD";
   rendering circuitry to render images for display having viewpoints corresponding to the tracked poses of the HMD;
   trajectory calculation circuitry to calculate a smoothed trajectory for position of the HMD in dependence on the tracking information;
   first image re-projection circuitry to re-project at least some of the rendered images according to a first re-projection operation to obtain first re-projected images for display by another display device, in which the first image re-projection circuitry is configured to re-project a given rendered image having a given viewpoint position for a different viewpoint position corresponding to the smoothed trajectory for the position of the HMD; and
   output circuitry to output the first re-projected images for display by the another display device.
2. The apparatus according to clause 1, wherein the trajectory calculation circuitry is configured to calculate the smoothed trajectory in dependence on a smoothing calculation using the received tracking information.
3. The apparatus according to clause 2, wherein the trajectory calculation circuitry is configured to calculate the smoothed trajectory in dependence on a moving average calculation using the received tracking information.
4. The apparatus according to clause 2, wherein the smoothed trajectory comprises a plurality of calculated positions for the HMD for a period of time and the trajectory calculation circuitry is configured to calculate a next position for the smoothed trajectory in dependence on a weighted average of a most recent calculated position for the smoothed trajectory and a current tracked position of the HMD with a greater weighting for the most recent calculated position.
5. The apparatus according to any preceding clause, wherein the trajectory calculation circuitry is configured to calculate an extrapolated trajectory for the position of the HMD in dependence on at least a portion of the smoothed trajectory, the extrapolated trajectory comprising one or more predicted positions for the HMD.
6. The apparatus according to clause 4 or clause 5, wherein the first image re-projection circuitry is configured to re-project the given rendered image having the given viewpoint position for the different viewpoint position, in which the different viewpoint position corresponds to one of:
   a calculated position associated with the smoothed trajectory; and
   a predicted position for the HMD.
7. The apparatus according to any preceding clause, wherein the first image re-projection circuitry is configured to re-project the given rendered image having the given viewpoint position for the different viewpoint position corresponding to a calculated position on the smoothed trajectory for a respective time that is between a start time of a rendering operation for rendering the given rendered image and a time at which the first image re-projection operation is to be performed for the given rendered image.
8. The apparatus according to any preceding clause, wherein the trajectory calculation circuitry is configured to calculate a smoothed trajectory for the pose of the HMD in dependence on the tracking information, the smoothed trajectory for the pose of the HMD comprising a plurality of calculated poses for the HMD for a period of time, and the first image re-projection circuitry is configured to re-project the given rendered image having a given viewpoint pose for a different viewpoint pose corresponding to the smoothed trajectory for the pose of the HMD.
9. The apparatus according to any preceding clause, comprising second image re-projection circuitry configured to re-project at least some of the rendered images according to a second re-projection operation to obtain second re-projected images for display by the HMD, wherein the output circuitry is configured to output the second re-projected images for display by the HMD.
10. The apparatus according to clause 9, wherein the second image re-projection circuitry is configured to re-project the given rendered image according to the second re-projection operation to re-project the given rendered image for a current viewpoint corresponding to a current tracked pose of the HMD.
11. The apparatus according to any preceding clause, wherein the rendering circuitry is configured to render at least some of the images for display having a field of view greater than a display field of view associated with the HMD.
12. The apparatus according to any preceding clause, wherein the first image re-projection circuitry is configured to re-project one or more rendered images according to the first re-projection operation to obtain one or more first re-projected images for display by the another display device, in which one or more of the first re-projected images comprise a portion outside a field of view of one or more of the rendered images, and wherein the first image re-projection circuitry is configured to use image data from one or more image sources for the portion outside the field of view.
13. The apparatus according to any preceding clause, comprising detection circuitry to detect image-based motion vector information for at least some of the rendered images, and wherein the first image re-projection circuitry is configured to re-project the given rendered image for the different viewpoint in dependence on the image-based motion vector information.
14. A computer implemented method comprising:
   receiving tracking information indicative of tracked poses of a head mountable display "HMD";
   rendering images for display having viewpoints corresponding to the tracked poses of the HMD;
   calculating a smoothed trajectory for position of the HMD in dependence on the tracking information;
   re-projecting at least some of the rendered images according to a first re-projection operation to obtain first re-projected images for display by another display device;
   in which re-projecting a given rendered image having a given viewpoint position according to the first re-projection operation comprises re-projecting the given rendered for a different viewpoint position corresponding to the smoothed trajectory for the position of the HMD; and
   outputting the first re-projected images for display by the another display device.
15. Computer software which when executed by a computer causes the computer to perform the method according to clause 14.

## Claims

1. Apparatus comprising:
receiving circuitry to receive tracking information indicative of tracked poses of a head mountable display "HMD";
rendering circuitry to render images for display having viewpoints corresponding to the tracked poses of the HMD;
trajectory calculation circuitry to calculate a smoothed trajectory for position of the HMD in dependence on the tracking information;
first image re-projection circuitry to re-project at least some of the rendered images according to a first re-projection operation to obtain first re-projected images for display by another display device, in which the first image re-projection circuitry is configured to re-project a given rendered image having a given viewpoint position for a different viewpoint position corresponding to the smoothed trajectory for the position of the HMD; and
output circuitry to output the first re-projected images for display by the another display device.

2. The apparatus according to claim 1, wherein the trajectory calculation circuitry is configured to calculate the smoothed trajectory in dependence on a smoothing calculation using the received tracking information.

3. The apparatus according to claim 2, wherein the trajectory calculation circuitry is configured to calculate the smoothed trajectory in dependence on a moving average calculation using the received tracking information.

4. The apparatus according to claim 2, wherein the smoothed trajectory comprises a plurality of calculated positions for the HMD for a period of time and the trajectory calculation circuitry is configured to calculate a next position for the smoothed trajectory in dependence on a weighted average of a most recent calculated position for the smoothed trajectory and a current tracked position of the HMD with a greater weighting for the most recent calculated position.

5. The apparatus according to any preceding claim, wherein the trajectory calculation circuitry is configured to calculate an extrapolated trajectory for the position of the HMD in dependence on at least a portion of the smoothed trajectory, the extrapolated trajectory comprising one or more predicted positions for the HMD.

6. The apparatus according to claim 4 or claim 5, wherein the first image re-projection circuitry is configured to re-project the given rendered image having the given viewpoint position for the different viewpoint position, in which the different viewpoint position corresponds to one of:
a calculated position associated with the smoothed trajectory; and
a predicted position for the HMD.

7. The apparatus according to any preceding claim, wherein the first image re-projection circuitry is configured to re-project the given rendered image having the given viewpoint position for the different viewpoint position corresponding to a calculated position on the smoothed trajectory for a respective time that is between a start time of a rendering operation for rendering the given rendered image and a time at which the first image re-projection operation is to be performed for the given rendered image.

8. The apparatus according to any preceding claim, wherein the trajectory calculation circuitry is configured to calculate a smoothed trajectory for the pose of the HMD in dependence on the tracking information, the smoothed trajectory for the pose of the HMD comprising a plurality of calculated poses for the HMD for a period of time, and the first image re-projection circuitry is configured to re-project the given rendered image having a given viewpoint pose for a different viewpoint pose corresponding to the smoothed trajectory for the pose of the HMD.

9. The apparatus according to any preceding claim, comprising second image re-projection circuitry configured to re-project at least some of the rendered images according to a second re-projection operation to obtain second re-projected images for display by the HMD, wherein the output circuitry is configured to output the second re-projected images for display by the HMD.

10. The apparatus according to claim 9, wherein the second image re-projection circuitry is configured to re-project the given rendered image according to the second re-projection operation to re-project the given rendered image for a current viewpoint corresponding to a current tracked pose of the HMD.

11. The apparatus according to any preceding claim, wherein the rendering circuitry is configured to render at least some of the images for display having a field of view greater than a display field of view associated with the HMD.

12. The apparatus according to any preceding claim, wherein the first image re-projection circuitry is configured to re-project one or more rendered images according to the first re-projection operation to obtain one or more first re-projected images for display by the another display device, in which one or more of the first re-projected images comprise a portion outside a field of view of one or more of the rendered images, and wherein the first image re-projection circuitry is configured to use image data from one or more image sources for the portion outside the field of view.

13. The apparatus according to any preceding claim, comprising detection circuitry to detect image-based motion vector information for at least some of the rendered images, and wherein the first image re-projection circuitry is configured to re-project the given rendered image for the different viewpoint in dependence on the image-based motion vector information.

14. A computer implemented method comprising:
receiving tracking information indicative of tracked poses of a head mountable display "HMD";
rendering images for display having viewpoints corresponding to the tracked poses of the HMD;
calculating a smoothed trajectory for position of the HMD in dependence on the tracking information;
re-projecting at least some of the rendered images according to a first re-projection operation to obtain first re-projected images for display by another display device;
in which re-projecting a given rendered image having a given viewpoint position according to the first re-projection operation comprises re-projecting the given rendered for a different viewpoint position corresponding to the smoothed trajectory for the position of the HMD; and
outputting the first re-projected images for display by the another display device.

15. Computer software which when executed by a computer causes the computer to perform the method according to claim 14.
